(19) Europäisches Patentamt
European Patent Office
Office européen des brevets

(11) EP 2 851 414 A1

(12) **EUROPEAN PATENT APPLICATION**
published in accordance with Art. 153(4) EPC

(43) Date of publication:
**25.03.2015 Bulletin 2015/13**

(21) Application number: **13790114.6**

(22) Date of filing: **08.03.2013**

(51) Int Cl.:
***C11B 5/00*** *(2006.01)* ***A23D 7/00*** *(2006.01)*
***A23D 9/00*** *(2006.01)* ***A23D 9/007*** *(2006.01)*

(86) International application number:
**PCT/JP2013/056401**

(87) International publication number:
**WO 2013/172075 (21.11.2013 Gazette 2013/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.05.2012 JP 2012113963**

(71) Applicant: **J-Oil Mills, Inc.**
**Tokyo 104-0044 (JP)**

(72) Inventors:
- **SADAKANE, Tadayoshi**
  **Tokyo 104-0044 (JP)**
- **HAR,A Yusuke**
  **Tokyo 104-0044 (JP)**
- **YAMAGUCHI, Takashi**
  **Tokyo 104-0044 (JP)**

(74) Representative: **Gallego Jiménez, José Fernando**
**Ingenias Creaciones, Signos e Invenciones S.L.P.**
**Avda. Diagonal 421, 2**
**08008 Barcelona (ES)**

# (54) CRYSTALLIZATION ACCELERATOR

(57) To provide a substance capable of imparting an excellent crystallization-accelerating effect to an oil or fat, and an oil or fat composition containing said substance. The oil or fat composition has an excellent crystallization-accelerating effect, and therefore can improve workability/processability and texture, such as the sugar dissolution, stickiness and texture of a fried doughnut, the filled state and hardness of shortening/margarine, and the time required for drying a coating chocolate.

[Solution] The present invention is a crystallization accelerator comprising a polymer compound that includes, as constituent components, a C18-28 hydroxy saturated fatty acid, which respectively has a hydroxyl group and a carboxyl group at both terminals and may have one carbonyl group in the chain thereof, a glycerin and optionally a fatty acid, said polymer compound being obtained by polymerizing the constituent components to a molecular weight of 3,000 to 100,000.

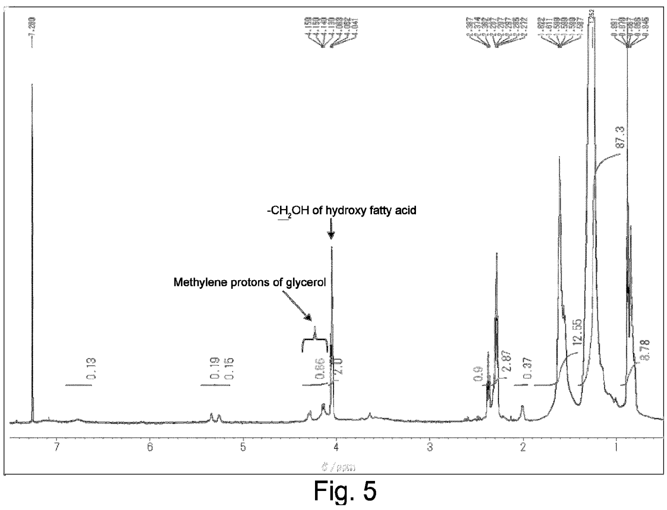


Fig. 5

EP 2 851 414 A1

## Description

[Technical Field]

The present invention relates to a novel crystallization accelerator, and more particularly to a crystallization accelerator of an oil or fat and an application thereof.

[Background Art]

In recent days, there has widely been used an edible oil or fat such as frying oil, margarine, oil or fat for stew, or oil or fat for chocolate, which contains no trans fatty acid or contains low-content trans fatty acid. Such oil or fat may cause a delay on crystallization behavior, leading to deterioration of workability during the production of foods, and a problem such as deterioration of quality of products. For example, in frying oil of doughnuts, the crystallization behavior of a compounded oil or fat becomes important so as to improve melting and stickiness of sugar of fried doughnuts. Crystallization acceleration of a compounded oil or fat is effective to improve the filling state during the production of shortening/margarine. The process for the production of stew or curry roux includes the step of pouring melted roux into a container and solidifying the melted roux while cooling. The crystallization rate of an oil or fat for stew or curry is effective to reduce working hours. In a coating chocolate, when a melted chocolate dough has poor dryability, drying takes a long time. Workability requiring strong cooling deteriorates. Although drying requires a short time, since workability deteriorates even of the viscosity increases at the beginning, control of crystallization of a compounded oil or fat becomes important so as to improve workability of the coating chocolate.

Heretofore, an emulsifier has been mixed so as to accelerate crystallization of an oil or fat. For example, Patent Literature 1 discloses a crystallization accelerator of an oil or fat, comprising a sorbitan fatty acid ester in which an esterification rate is 28 to 60% and also the sorbitol type content is 20 to 40%. However, when the emulsifier is added to an oil or fat composition for frying, the crystallization accelerating effect may be significantly reduced by heating.

[Citation List]

[Patent Literature]

[Patent Literature 1]

Japanese Unexamined Patent Application, Publication No. 2009-209350

[Summary of Invention]

[Technical Problem]

An object of the present invention is to provide a substance which accelerates crystallization of an oil or fat, and an oil or fat composition containing the same. Another object of the present invention is to produce a food produced by using the oil or fat composition.

[Solution to Problem]

The present inventors have intensively studied about the above objects and found that the objects can be achieved by the following inventions. Thus, the present invention provides a crystallization accelerator comprising a polymer compound that includes, as constituent components, a C18-28 saturated hydroxy fatty acid which respectively has a hydroxyl group and a carboxyl group at both terminals and may have one carbonyl group in the chain thereof, a glycerin and optionally a fatty acid, said polymer compound being polymerized by estel linkage with the constituent components to a molecular weight of 3,000 to 100,000. As used herein, the term "polymer compound" includes a mixture thereof. The term "polymer" is used in the sense of including a polymer and an oligomer.

The crystallization accelerator is obtained from, for example, palm fruit, or a palm-based oil or fat.

The content of the polymer compound is preferably at least 0.005% by weight.

The crystallization accelerator may be the polymer compound per se.

The saturated hydroxy fatty acid has a weight ratio in which C18:C22:C24:C28 is prefereably 5 to 45:10 to 40:20 to 65:5 to 30.

The proportion of the C18-28 saturated hydroxy fatty acid which has a carbonyl group in the chain, preferably is 15 to 70% by weight based on the whole hydroxy fatty acid.

The molar ratio of the saturated hydroxy fatty acid to glycerol is preferably 10:1 to 1:1.

The hydroxy fatty acid preferably accounts for 20 to 90% by weight of the total of the saturated hydroxy fatty acid and the fatty acid.

The proportion of the C24 saturated hydroxy fatty acid which has a carbonyl group in the chain thereof, preferably is at least 90% by weight based on the whole hydroxy fatty acid having a carbonyl group in the chain thereof.

The present invention also provides a method for producing the above crystallization accelerator, which includes the step of recovering a crystallization accelerator by subjecting palm fruit to organic solvent extraction, or oil or fat extraction.

The palm fruit is preferably palm kernel, and more preferably palm seed coat.

The present invention also provides a method for producing the above crystallization accelerator, which includes the step of recovering a hard part obtained by fractionating a palm-based oil or fat.

The production method preferably includes the step of recovering an organic solvent-insoluble part obtained by further washing the hard part with an organic solvent.

The production method more preferably includes the step of recovering an organic solvent extract obtained by further subjecting the organic solvent-insoluble part to organic solvent extraction.

In the production method, a fraction having a polystyrene-equivalent molecular weight of 3,000 to 100,000 may be recovered by subjecting the organic solvent extract to molecular weight fractionation. Whereby, a crystallization accelerator composed of a polymer compound is obtained.

The present invention also provides a crystallization accelerating oil or fat composition including:

(I) the above crystallization accelerator, and
(II) a base oil composed of an oil or fat having a melting point not lower than 10°C, wherein the content of the component (I) is 0.2 to 15% by weight and the content of the component (II) is 85 to 99.8% by weight.

The present invention also provides a crystallization accelerating oil or fat composition comprising 0.0005 to 1% by weight of the above crystallization accelerator, wherein the composition has an iodine value not less than 40.

The crystallization accelerating oil or fat composition is, for example, for frying oil, shortening, margarine, chocolate, curry roux, or stew roux.

The present invention also provides a food using the above crystallization accelerating oil or fat composition.

[Advantageous Effects of Invention]

The crystallization accelerator and the oil or fat composition containing the same of the present invention exhibit excellent crystallization accelerating properties to an oil or fat as compared with a conventional emulsifier. The crystallization accelerating effect is significantly reduced by heating in an oil or fat composition for frying containing an emulsifier added therein, while a reduction in crystallization acceleration is not recognized even when heated under approximate frying conditions in the oil or fat composition of the present invention.

The crystallization accelerator and the oil or fat composition containing the same of the present invention have the following various applications. For example, while it is important whether or not crystallization occurs in frying oil of doughnuts in view of sugar melting, stickiness, and texture of fried doughnuts, the crystallization accelerator of the present invention is capable of improve them. The filling state during the production of shortening/margarine is improved by the crystallization accelerating action. If the crystallinity is high from the initial stage, more strong stirring/kneading action is exerted, leading to homogenization, thus improving quality. When a coating chocolate has poor dryability, drying takes a long time and thus cooling function must be enhanced. The shorter the time required for drying becomes, the better. However, when the viscosity increases from the initial stage, workability deteriorates. The addition of the crystallization accelerator of the present invention to a base dough for coating chocolate enables an improvement in dryability and working efficiency. It also becomes possible to work even in the case of a dough for soft chocolate.

[Brief Description of Drawings]

Fig. 1 is a flow chart for extracting, concentrating, and purifying a crystallization accelerator of the present invention from an edible oil or fat.
Fig. 2 is a GPC chart of a chloroform-extractable part of Examples according to the present invention.
Fig. 3 is a graph in which a crystallization rate represented by SFC at 40°C for 20 minutes of a crystallization accelerating oil or fat composition of the present invention is plotted against a PTS ratio in the oil or fat composition. It is possible to use the obtained relation as a calibration curve for estimating the crystallization rate and the PTS

ratio of the oil or fat composition.

Fig. 4 is a GPC chart of a chloroform-extractable part of Examples according to the present invention. Fractions Nos.1 to 4 in the drawing each corresponds to a polymer compound.

Fig. 5 is a $^1$H NMR chart (600 MHz) measured after dissolving the fraction 3 shown in Fig. 4 in deuterated chloroform. Methylene protons (2H) attached to a hydroxyl group of hydroxy fatty acid are observed within a range of 4.0 ppm to 4.1 ppm, and methylene protons (4H) attached to a hydroxyl group of glycerol are observed within a range of 4.1 ppm to 4.4 ppm. As is apparent from a proton ratio which is a peak area ratio, molar ratio of hydroxy fatty acid:glycerol is 4.7:1.

Fig. 6 is a MALDI/TOF/MS chart of a polymer compound of the present invention. As is apparent from the chart, a polymer compound having activity contains a polymer compound having a repeating unit of 380 Da. 14 Da intervals mean $CH_2$ intervals.

Fig. 7 shows mass spectrometry data in which trimethylsilylated C22:0 hydroxy fatty acid methyl is ionized with EI. A structure of C22:0 hydroxy fatty acid methyl was identified from library search of mass spectrum.

Fig. 8 shows a behavior of SFC at 25°C of an oil or fat composition containing 1% by weight of a crystallization accelerator PTS (concentration of polymer compound: 0.07% by weight) prepared in Example 12. For comparison, SFCs of an oil or fat composition with no addition, and oil or fat compositions containing 1% by weight of a wholly hydrogenated rapeseed oil or tripalmitin added therein are shown. SFC of the oil or fat composition of the present invention is the same as that of other examples in an initial stage, but rapidly increases after a lapse of a given time as compared with other examples. Accordingly, according to the present invention, not only crystallization of the oil or fat is accelerated, but also working hours to a certain extent can be ensured until SFC rapidly increases.

Fig. 9 is a schematic diagram showing a cross section of palm fruit and name of each site.

[Description of Embodiments]

Embodiments of the present invention will be described in detail below. The crystallization accelerator of the present invention includes, as constituent components, a saturated hydroxy fatty acid having 18 to 28 carbon atoms, which has respectively a hydroxyl group and a carboxyl group at both terminals and may have one carbonyl group in the chain thereof, a glycerol and optionally a fatty acid, said polymer compound being obtained by polymerizing the constituent components by estel linkage to a molecular weight of 3,000 to 100,000. The polymer compound may be used alone, or may used as a mixture of two or more thereof.

The saturated hydroxy fatty acid has a weight ratio in which C18:C22:C24:C28 is preferably 5 to 45:10 to 40:20 to 65:5 to 30, and particularly preferably 5 to 30:10 to 30:30 to 65:10 to 30.

When a hydroxy fatty acid having a carbonyl group in the chain (hereinafter referred to as oxohydroxy fatty acid) is contained as a constituent component, the content of an oxohydroxy fatty acid is preferably 15 to 70% by weight, and particularly preferably 20 to 50% by weight, based on the whole hydroxy fatty acid.

The proportion of the C24 oxohydroxy fatty acid is preferably at least 90% by weight based on the whole oxohydroxy fatty acid.

The number of carbon atoms of the hydroxy fatty acid contained appropriately in the constituent component is usually 18 to 28.

A weight ratio of the hydroxy fatty acid to the total of the hydroxy fatty acid and the fatty acid is preferably 20% to 90%, more preferably 25% to 90%, and particularly preferably 30% to 90%.

A molar ratio of the hydroxy fatty acid to the glycerol is preferably 10:1 to 1:1, still more preferably 7:1 to 1:1, and particularly preferably 6:1 to 1:1.

The polymer compound preferably contains a diacid. A weight ratio of the diacid to the hydroxy fatty acid is more preferably 1:1 to 1:20, and particularly preferably 1:4 to 1:11.

The molecular weight of the polymer compound is 3,000 to 100,000, preferably 5,000 to 100,000, and more preferably 5,000 to 50,000.

The polymer compound includes a structural unit of the chemical formula:

[Chemical 1]

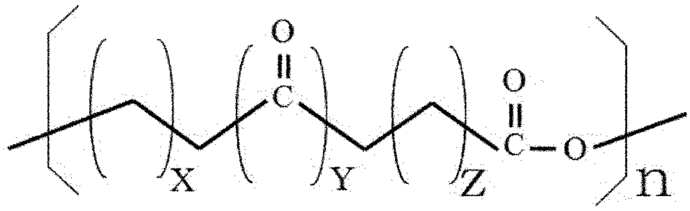

wherein x is an integer of 0 to 25, y is 0 or 1, z is an integer of 0 to 25, provided that the total of x, y, and z is 15 to 25, and n is an integer of 1 to 15. Aforementioned n is preferably 1 to 10, and more preferably 1 to 7.

The terminal of the polymer is not particularly limited, and is usually a hydroxyl group, a carboxyl group, a fatty acid ester, or the like.

The components other than the polymer compound in the crystallization accelerator are not particularly limited, and examples thereof include saturated or unsaturated triglyceride, diglyceride, monoglyceride and the like which are contained usually in the oil or fat.

The effect of the crystallization accelerator of the present invention can be evaluated by measuring SFC (solid fat content) of a test composition mixed in a base oil (e.g., palm oil) under given conditions (e.g., at 25°C to 40°C for 20 minutes). High SFC for 20 minutes means high crystallization accelerating effect of the crystallization accelerator.

The lower limit of the content of the polymer compound in the crystallization accelerator is usually 0.005% by weight, and preferably 0.03% by weight. There is no upper limit, and the upper limit is preferably 1% by weight in view of storage of physical properties other than crystallization of the base oil.

The crystallization accelerator may be composed of the polymer compound per se. Thus, the present invention also provides a crystallization accelerator comprising a polymer compound that includes, as constituent components, a C18-28 saturated hydroxy fatty acid which respectively has a hydroxyl group and a carboxyl group at both terminals and may have one carbonyl group in the chain thereof, a glycerin and optionally a fatty acid, said polymer compound being polymerized by estel linkage with the constituent components to a molecular weight of 3,000 to 100,000.

The polymer compound or the crystallization accelerator containing the same can be obtained from palm fruit. A cross section of palm fruit and name of each site are shown in Fig. 9. A large amount of the polymer compound of the present invention exists in palm kernel.

The present invention provides a method for producing a crystallization accelerator, which includes subjecting palm fruit, especially palm kernel, to organic solvent extraction, or oil or fat extraction. The organic solvent extraction is performed by a conventional method, for example, the following procedure. First, a palm fruit, especially seed coat, is boiled in high temperature water and then deactivated lipase. It is preferred to finely shredding using a blender so as to make it easy for the component to be extracted. A crystallization accelerator is extracted in an organic solvent by refluxing the shredded substance in an organic solvent such as chloroform or toluene at high temperature. The temperature of the organic solvent under reflux is usually 30 to 120°C, and preferably 50 to 110°C. After the extraction, an insoluble substance is filtered and then the organic solvent is removed to obtain the crystallization accelerator.

The thus obtained crystallization accelerator may be subjected to molecular weight fractionation such as gel permeation chromatography or ultrafiltration, thereby selecting a fraction having a polystyrene-equivalent molecular weight of 3,000 to 100,000.

The polymer compound or the crystallization accelerator containing the same of the present invention can also be obtained from an edible oil or fat such as a palm-based oil or fat. A method for extracting a polymer compound from a palm-based oil or fat will be described below with reference to Fig. 1.

The palm-based oil or fat includes palm oil, and fractionated palm oil such as palm stearin or palm superstearin obtained by fractionating palm oil. An oil or fat as raw material is preferably palm superstearin having an iodine value of 10 to 17 (hereinafter sometimes referred to as PSS).

The palm-based oil or fat such as palm superstearin is subjected to the fractionation step. Fractionation may be either dry fractionation or solvent fractionation. After melting palm superstearin at the melting temperature or higher, the temperature is gradually lowered to cause crystallization so that SFC of the slurry becomes not greater than 20% by weight, preferably 0.2 to 18% by weight, more preferably 0.2 to 10% by weight, still more preferably 0.2 to 5% by weight, and most preferably 0.2 to 2% by weight.

The slurry is fractionated so that the yield of the hard part represented by the formula: [weight of hard part/(weight of hard part + weight of liquid part)] becomes not greater than 26% by weight, preferably 0.3 to 25% by weight, and still more preferably 1.0 to 15% by weight. Pressure filtration is performed by a filter press, a belt press, or the like for fractionation. In the case of fractionation, the value of fractionation efficiency represented by the yield of the hard part/slurry

SFC is preferably controlled to 10 or less, still more preferably 1.0 to 8.0, and particularly preferably 1.2 to 7.0. An oil or fat composition composed of the hard part obtained by fractionating palm superstearin is called palm triple stearin (hereinafter sometimes referred to as PTS). The oil or fat composition composed of the hard part usually contains about 0.005 to 1% by weight of a polymer compound.

In the organic solvent washing/extraction step shown in Fig. 1, the polymer compound in PTS is further concentrated. First, chloroform is mixed in the proportion of 500 ml per 100 g of PTS so as to remove triglyceride from PTS. After the PTS mixture was left to stand at the temperature of 15°C to 25°C for 6 to 22 hours, the insoluble component was filtered through a cylindrical filter paper to obtain a chloroform-insoluble part remained on the cylindrical filter paper.

In order to further remove triglyceride or diglyceride from the chloroform-insoluble part remained on the cylindrical filter paper, the chloroform-insoluble part is washed while refluxing hexane at 55°C to 65°C using a Soxhlet extractor. As a result, a hexane-insoluble part remained on the cylindrical filter paper without being dissolved in hexane is obtained.

In order to obtain a polymer compound from the hexane-insoluble part remained on the cylindrical filter paper, extraction with chloroform at 50 to 60°C is performed using a Soxhlet extractor. A chloroform-soluble part (hereinafter referred to as chloroform extract) is obtained by this operation.

The chloroform extract is fractionated by an appropriate molecular weight fractionation method to recover a polymer compound having a polystyrene-equivalent molecular weight of 3,000 to 100,000.

The crystallization accelerator of the present invention may be concentrated so that the content of the polymer compound content becomes at least 0.005% by weight. Therefore, the crystallization accelerator of the present invention contains a concentrate after fractionation of PSS, for example, a hard part after dry fractionation, a chloroform-insoluble part of the hard part, a hexane-insoluble part of the chloroform-insoluble part, a chloroform extract of the hexane-insoluble part, and a GPC fraction (polymer compound) of the chloroform extract.

The present invention also provides a crystallization accelerating oil or fat composition including (I) a crystallization accelerator and (II) a base oil. This oil or fat composition has excellent crystallization accelerating action to an oil or fat. Moreover, the oil or fat composition of the present invention can ensure working period to a certain extent (e.g., 1 to 4 minutes) until crystallization is rapidly accelerated. Therefore, the oil or fat composition of the present invention has high industrial applicability as a crystallization accelerator.

The base oil is decided according to applications of the oil or fat composition. When the oil or fat composition is, for example, for frying oil for frozen foods, the base oil is an oil or fat having a melting point not lower than 10°C, and preferably 15 to 40°C. When the melting point is lower than 10°C, a crystal may not be formed, or crystal formation may be delayed. Examples of the oil or fat having a melting point not lower than 10°C include palm oil, coconut oil, palm kernel oil, sal fat, cacao butter, shea butter, and fractionated oil and hydrogenated oil thereof; beef tallow, lard, butterfat, fish oil, and hydrogenated oil thereof; and soybean oil, rapeseed oil, rice bran oil, corn oil, cottonseed oil, safflower oil, sunflower oil, olive oil, hydrogenated oil of sesame oil, or transesterified oil thereof.

In the oil or fat composition of (I) a crystallization accelerator and (II) a base oil having a melting point not lower than 10°C, the content of the component (I) is preferably 0.2 to 15% by weight and the content of the component (II) is preferably 85 to 99.8% by weight.

The base oil may be at least one selected from the group consisting of palm oil and/or fractionated palm oil having an iodine value (also referred to as IV) of 30 to 65, especially IV of 30 to 60, random transesterified oil of palm-based oil or fat and lauric oil or fat and/or hydrogenated oil thereof, oil which is liquid at normal temperature, palm kernel oil and fractionated palm kernel oil, and hydrogenated oil of palm kernel oil and fractionated palm kernel oil.

The palm-based oil or fat includes palm oil, fractionated oil of palm oil, transesterified oil, hydrogenated oil, processed oil or fat obtained by subjecting palm oil to two or more treatments selected from fractionation, transesterification, and hydrogenation, and the like. The fractionated palm oil includes palm olein, super palm olein, palm stearin, and the like.

Suitable examples of the transesterified oil include palm-based oil or fat, random transesterified oil or fat of palm-based oil or fat and lauric oil or fat and/or hydrogenated oil thereof. Lauric oil or fat means an oil or fat containing lauric acid having 12 carbon atoms as a main constituent fatty acid, like palm kernel oil and coconut oil. It may be preferred to use those in which palm-based oil or fat and lauric oil or fat are transesterified in a weight ratio of preferably 20:80 to 70:30, and particularly preferably 30:70 to 60:40. The ester exchange reaction may be performed by either a method using lipase as a catalyst or a method using a metal catalyst such as sodium methylate.

Suitable examples of the hydrogenated oil include extremely hardened palm oil, extremely hardened palm kernel oil, and the like. The curing reaction of the hydrogenated oil may be performed either before or after transesterification.

Examples of the oil, which is liquid at normal temperature, include soybean oil, rapeseed oil, rice bran oil, corn oil, cottonseed oil, safflower oil, sunflower oil, olive oil, sesame oil, super palm olein (IV not less than 65), and the like. These oils can be used alone, or two or more oils can be used in combination. The oil is preferably soybean oil, rapeseed oil, corn oil, cottonseed oil, safflower oil, or super palm olein (IV not less than 65).

The content of palm oil having IV of 30 to 65 and/or fractionated palm oil is usually 40% by weight or more,

and preferably 50 to 100% by weight, based on the whole base oil.

The content of the random transesterified oil of palm-based oil or fat and lauric oil or fat and/or hydrogenated oil thereof is usually 10 to 80% by weight, preferably 10 to 60% by weight, and still more preferably 10 to 40% by weight, based on the whole base oil.

The content of the oil, which is liquid at normal temperature is usually 0 to 40% by weight, preferably 10 to 40% by weight, and still more preferably 10 to 30% by weight, based on the whole base oil.

When the base oil is a compounded oil containing palm oil having an iodine value of 30 to 65 and/or fractionated palm oil, and oil which is liquid at normal temperature, it is preferred to contain palm oil having an iodine value of 30 to 65 and/or fractionated palm oil in the content of usually 50 to 90% by weight, and preferably 60 to 90% by weight, based on the whole base oil, and oil which is liquid at normal temperature in the content of usually 10 to 50% by weight, and preferably 10 to 40% by weight, based on the whole base oil.

When the base oil is a compounded oil containing palm oil having an iodine value of 30 to 65 and/or fractionated palm oil, and random transesterified oil of palm-based oil or fat and lauric oil or fat and/or hydrogenated oil thereof, it is preferred to contain palm oil having an iodine value of 30 to 65 and/or fractionated palm oil in the content of usually 20 to 70% by weight, and preferably 30 to 70% by weight, based on the whole base oil, and random transesterified oil of palm-based oil or fat and lauric oil or fat and/or hydrogenated oil thereof in the content of usually 10 to 60% by weight, and preferably 10 to 40% by weight, based on the whole base oil.

When the base oil is a compounded oil containing palm oil having an iodine value of 30 to 65 and/or fractionated palm oil, random transesterified oil of palm-based oil or fat and lauric oil or fat, and oil which is liquid at normal temperature, it is preferred to contain palm oil having an iodine value of 30 to 65 and/or fractionated palm oil in the content of usually 20 to 70% by weight, and preferably 30 to 70% by weight, based on the whole base oil, oil obtained by random transesterification of palm-based oil or fat and lauric oil or fat and/or hydrogenated oil thereof in the content of usually 10 to 60% by weight, and preferably 10 to 40% by weight, based on the whole base oil, and oil which is liquid at normal temperature in the content of usually 10 to 40% by weight, and preferably 10 to 40% by weight, based on the whole base oil.

When the base oil is a compounded oil of extremely hardened palm kernel oil and palm kernel olein, the base oil contains extremely hardened palm kernel oil in the content of usually 30 to 80% by weight, and preferably 30 to 60% by weight, based on the whole base oil, and palm kernel olein in the content of usually 20 to 70% by weight, and preferably 40 to 70% by weight, based on the whole base oil.

The oil or fat composition of the present invention may be those prepared by mixing 0.0005 to 1% by weight, and preferably 0.0005 to 0.5% by weight, of a crystallization accelerator composed of a polymer compound in a base oil. The base oil is the same as above, and the oil or fat composition has an iodine value not less than 40, and preferably 42 to 75. When the oil or fat composition has an iodine value not less than 40, it is possible to obtain the effect using a small amount of the crystallization accelerator.

It is possible to add, in addition to the crystallization accelerator and the base oil, additives known in the relevant technical field to the composition of the present invention as long as the effects of the present invention are not impaired. Examples of additives include other edible oils and fats; emulsifiers such as lecithin, glycerol fatty acid ester, sorbitan fatty acid ester, propylene glycol fatty acid ester, sucrose fatty acid ester, and polyglycerol fatty acid ester; antioxidants such as tocopherol and vitamin C palminate; thickeners/stabilizers such as pectin, carrageenan, xanthan gum, carboxymethyl cellulose (CMC), guar gum, acasia, locust bean gum, karaya gum, tamarind gum, Tara gum, Kifaseran, casein sodium, alginate, agar, gum elemi, gum Canada, and gum dammar; colorants; flavors such as milk flavor, vanilla flavor, and vanilla essence; saccharides such as glucose, maltose, sucrose, lactose, trehalose, maltotriose, palatinose, reduced palatinose, xylitol, erythritol, maltitol, sorbitol, isomerized glucose syrup, and starch syrup; table salt; and dairy products, butterfat, prepared butterfat products, such as whole milk powder, buttermilk, fermented milk, skim milk powder, whole sweetened condensed milk, sweetened condensed skim milk, and fresh cream.

The oil or fat composition of the present invention is obtained by mixing a crystallization accelerator and a base oil, and appropriate additives in a predetermined ratio. These components may be simultaneoulsy mixed, or a crystallization accelerator may be mixed with a part of a base oil, followed by mixing with the remaining components.

It is expected that the oil or fat composition of the present invention is applied to various oil or fat compositions, for example, frying oil or fat composition in the case of frying doughnuts, fried breads, snack food, instant noodles, daily dishes, and the like, oil or fat composition for margarine and shortening, oil or fat composition for stew and curry, oil or fat for chocolate composition, and the like, due to excellent crystallization accelerating action.

The present invention also provides a food including the above oil or fat composition. Examples of foods include doughnuts, fried breads, snack foods, instant noodles, daily dishes, margarine, shortening, stew roux, curry roux, chocolate, confectionaries coated with chocolate, and the like.

The amount of the oil or fat composition to be mixed in foods is appropriately determined according to the concentration of the polymer compound in the oil or fat composition, types of foods, addition conditions, and the like. The amount of the oil or fat composition to be added to foods is usually 1 to 100% by weight, and preferably 1 to 80% by weight.

[Examples]

The present invention will be described in detail by way of Examples and Comparative Examples of the present invention. However, the present invention is not limited to the following Examples.

[Example 1] (Preparation I of Crystallization Accelerator)

A crystallization accelerator was extracted from palm fruit by the following procedure. The palm fruit was divided into four types of exocarp, mesocarp (flesh), endocarp, and kernel (seed coat + endosperm) shown in Fig. 9, followed by weighing. Each site was separately heated at 100°C for 1 hour, thereby deactivating lipase contained therein. In order to make it easy to extract a component from each site, each site was shredded by a blender. Each site was dispersed in 150 ml of chloroform, followed by extraction for 7 hours while refluxing at 90°C. After extraction and cooling at room temperature, insoluble substances such as fiber, peel, and shell were subjected to natural filtration (filter paper: No. 2, manufactured by ADVANTEC Corporation). After the filtration, chloroform was removed by an evaporator to obtain four types of extracted oils and fats. The weight of each site before extraction and the weight of extracted oil are shown in Table 1.

[Table 1]

| Site | Weight before extraction | | Weight of extracted oil | | |
|---|---|---|---|---|---|
| | Weight (g) | Ratio (%) | Weight (g) | Ratio (%) | Extraction ratio1) (%) |
| Exocarp | 5.0 | 10.1 | 2.5 | 12 | 51 |
| Mesocarp | 30.2 | 61.0 | 15.5 | 72 | 51 |
| Endocarp | 9.1 | 18.4 | 1.1 | 5 | 12 |
| Kernel (Seed coat + Endosperm) | 5.2 | 10.5 | 2.5 | 12 | 48 |
| Total | 49.5 | 100.0 | 21.6 | 100 | 44 |
| 1) Extraction ratio = [Weight of extracted oil/Weight of each site before extraction] x 100 | | | | | |

The crystallization rate of the oil or fat composition of an oil or fat A (purified palm oil of IV 52) containing, as a base oil, the oil or fat extracted from each site mixed therein was measured.

SFC after being left to stand at 25°C for 20 minutes of the oil or fat composition was measured by the following procedure. The oil or fat composition (2 ml) melted at 80°C was charged in a glass container, completely melted at 100°C and then maintained in a constant temperature water bath at 60°C for 60 minutes. After being left to stand in a constant temperature water bath at 25°C for 20 minutes, the amount of the precipitated crystal was measured by an NMR analyzer (NMS120 minispec, manufactured by BRUKER Corporation). The results are shown in Table 2.

[Table 2]

| Oil or fat composition No. | Composition | | | SFC after being left to stand at 25°C for 20 minutes (%) |
|---|---|---|---|---|
| | Crystallization accelerator | | Oil or fat A (%) | |
| | Palm fruit extract/oil or fat | (%) | | |
| 1 | - | - | 100 | 0.7 |
| 2 | Exocarp extracted oil or fat | 10 | 90 | 0.0 |
| 3 | Mesocarp extracted oil or fat | 10 | 90 | 0.1 |
| 4 | Endocarp extracted oil or fat | 10 | 90 | 0.2 |
| 5 | Kernel (Seed coat + Endosperm) extracted oil or fat | 2 | 98 | 4.2 |
| 6 | Palm kernel stearin oil1) | 2 | 98 | 0.7 |
| 7 | RBD palm kernel oil2) | 2 | 98 | 0.0 |
| 1) Palm kernel stearin oil (manufactured by J-Oil Mills Inc.)<br>2) RBD palm kernel oil (manufactured by J-Oil Mills Inc.) | | | | |

The oil or fat composition 5 exhibited significantly increased SFC at 25°C for 20 minutes regardless of lower mixing amount of an extract than another. It has been found that a large amount of the polymer compound of the present invention is contained in the oil or fat extracted from kernel.

It is considered that regarding the oil or fat composition 5 obtained by extracting palm kernel in an organic solvent at high temperature, a large amount of a polymer compound having crystallization accelerating activity is extracted from seed coat as compared with the oil or fat composition 7 obtained by compression. It is considered that the copolymer is not easily extracted from seed coat as compared with the case of solvent extraction since the content crude fat of leed after compressing the oil or fat composition 7 from kernel is about 7.5% by weight, and the oil or fat remains in the leed of the compression step. As is apparent from the results of the crystallization rate in Table 2 and the above consideration, seed coat is preferably used as a raw material when a crystallization accelerator is prepared from palm fruit.

[Example 2] (Preparation II of Crystallization Accelerator)

A crystallization accelerator was prepared by subjecting a palm-based oil or fat to the dry fractionation step, and the organic solvent washing/extraction step shown in Fig. 1.

1. Dry Fractionation Step

In dry fractionation of palm superstearin of IV 12 (manufactured by MEWAHOLEO INDUSTRIES SDN.BHD., hereinafter referred to as PSS), 10 kg scale fractionation pilot equipment (Laboratory scale pilot fractionation, manufactured by De Smet & Co) was used. First, 9.02 kg of PSS was completely melted at 70°C and then the water temperature was gradually lowered to 60°C to deposit a crystal. During crystallization, 2 ml of a slurry was sampled and charged in a glass tube, and then SFC of the slurry was measured by the NMR analyzer.

Upon reaching slurry SFC of 0.5%, the slurry was fed to a laboratory filter and then subjected to pressure filtration up to 15 bar to obtain 371 g of a hard part (PTS), and 8,650 g of a liquid part (hereinafter referred to as "PSS-OL"). The yield of the hard part calculated by the formula: (weight of hard part)/(weight of hard part + weight of liquid part) was 4.1% by weight. Fractionation efficiency obtained by calculation of the formula: (yield of the hard part)/(SFC of slurry) was 8.9.

2. Organic Solvent Washing/Extraction Step

A polymer compound in PTS was concentrated by subjecting PTS to the organic solvent washing/extraction step in Fig. 1.

2.1 Chloroform Washing at 20°C

PTS (100 g) was dissolved in 330 ml of chloroform, and then the solution was left to stand at 20°C for 6 to 17 hours and filtered through a cylindrical filter paper (Whatman 603, 48 mm in inner diameter x 145 mm, manufactured by Whatman Inc.). As a result, 10.25 g of a chloroform-insoluble part on the filter paper was obtained.

2.2 Hexane Washing at 60°C

The chloroform-insoluble part (10.25 g) was placed on the extraction part of a Soxhlet extractor, together with a cylindrical filter paper, and then triglyceride contained in the chloroform-insoluble part was removed with hexane at 55°C to 65°C while refluxing with 500 ml of hexane for 2 hours. After washing, 1.82 g of a hexane-insoluble part remained on the cylindrical filter paper was obtained.

2.3 Chloroform Extraction at 50 to 60°C

The hexane-insoluble part (1.82 g) was refluxed with 500 ml of chloroform for 10 hours by a Soxhlet extractor in the same manner as above to obtain 0.0561 g of a chloroform-extractable part.

2.4 GPC Fractionation of Chloroform-Extractable Part

The chloroform-extractable part (0.0561 g) was dissolved in 10 ml of chloroform, followed by GPC analysis. A GPC chart is shown in Fig. 2. The measuring conditions are as follows.

Equipment: 1200 series HPLC System (manufactured by Agilent Technologies Inc.)
GPC column: TSKgel G2500$H_{XL}$, 7.8 mm I.D. x 30 cm, particle diameter of 5 μm (manufactured by TOSOH CORPORATION)

Mobile phase: chloroform (flow rate of 1 ml/min)
Column temperature: 40°C
Detector: RI

A fraction corresponding to the retention time of 5.2 to 7.0 minutes of the GPC chart in Fig. 2 was recovered to obtain 0.00572 g of a polymer compound.

[Examples 3 to 6] (Measurement of Crystallization Rate of Crystallization Accelerator)

Crystallization accelerating activity (hereinafter sometime referred to as "activity") of the crystallization accelerator composed of PTS obtained in the dry fractionation step of Example 2 was measured. Specifically, the crystallization rate (SFC at 40°C for 20 minutes) of the oil or fat composition obtained by mixing PTS in a base oil was measured. As the base oil, those obtained by decolorating and deodorizing PSS (IV 15, manufactured by MEWAHOLEO INDUSTRIES SDN.BHD.) of lot different from that used in Example 2 for the purpose of reducing the polymer compound (hereinafter referred to as "PSS purified product"), and an oil or fat B were used. The PSS purified product was prepared so that SFC at 40°C for 20 minutes of an oil or fat composition obtained by mixing the PSS purified product with oil or fat B in a mixing ratio of 60:40 becomes 0 to 5% (Comparative Example 1). The compositions of PTS, the PSS purified product, and the oil or fat B are shown in Table 3. The oil or fat B is an oil or fat prepared by hydrogenation and transesterification of a compounded oil of palm oil and palm kernel oil in a ratio of 50:50 by a conventional method.

SFC at 40°C of the oil or fat composition shown in Table 3 was measured by the following procedure. The composition (2 g) was melted by heating at the temperature of 100°C for 1 hour. The melt was maintained at the temperature of 60°C for 1 hour. Thereafter, SFC at 40°C as the crystallization rate was measured by cooling the melt to the temperature of 40°C and maintaining for 20 minutes. The results are shown in Table 3.

[Table 3]

| | Composition | | | Crystallization rate SFC at 40°C for 20 minutes (%) |
|---|---|---|---|---|
| | PTS of Example 2 | PSS purified product | Oil or fat B | |
| Comparative Example 1 | 0 | 60 | 40 | 0.74 |
| Example 3 | 0.9 | 59.1 | 40 | 4.77 |
| Example 4 | 3.3 | 56.7 | 40 | 17.62 |
| Example 5 | 5.1 | 54.9 | 40 | 28.45 |
| Example 6 | 9.9 | 50.1 | 40 | 46.39 |

As the concentration of PTS increases in Examples 3 to 6, the crystallization rate of the oil or fat composition also increases. A relation between the PTS ratio (X-axis) and the crystallization rate (Y-axis) was graphically shown in Fig. 3. It was possible to represent the PTS ratio (x) and SFC (y) at 40°C by a correlation shown in the equation (1):
[Mathematical 1]

$$y = 466.98x + 1.5339 \quad (r^2 = 0.9909) \qquad -(1)$$

The PTS ratio and the crystallization rate exhibited a satisfactory correlation.

It is possible to use the equation (1) so as to express the activity of the crystallization accelerator and the degree of concentration of the polymer compound. For example, an oil or fat composition in which a weight ratio of PSS of Example 2 to the oil or fat B is 60:40 was prepared, and SFC at 40°C for 20 minutes was measured. As a result, it was 16.4% (Table 4). When this numerical value is applied to the above calibration curve, the PTS ratio of the composition is 3.19%. When this numerical value is divided by the PSS ratio, the PTS ratio of PSS is 5.31%. Namely, the crystallization rate of PSS is equivalent to 5.31% of PTS. Conversely, the activity of PTS increases by 18.8 times larger than PSS. This fact means that PTS accelerates crystallization 18.8 times larger than PSS.

[Table 4]

| Composition of oil or fat composition (% by weight) | | SFC at 40 °C for 20 minutes (%) | PTS ratio of oil or fat composition (%) | PTS ratio of PSS (%) | Ratio of increase in activity of PTS1) (times, PSS ratio) |
|---|---|---|---|---|---|
| PSS | Oil or fat B | | | | |
| 60 | 40 | 16.4 | 3.19 | 5.32 | 18.8 |
| 1) Ratio of increase in activity = 1/[PTS ratio (%) estimated from calibration curve/PSS ratio (%)] | | | | | |

Each ratio of an increase in activity of a chloroform-extractable part and a polymer compound after GPC fractionation obtained in Example 2 was determined. First, an oil or fat composition was prepared by mixing the crystallization accelerator, the PSS purified product, and the oil or fat B in the ratio shown in Table 5A.

[Table 5A]

| | Oil or fat composition | | | |
|---|---|---|---|---|
| | Crystallization accelerator | | Base oil | |
| | Chloroform-extractable part (%) | Polymer compound (%) | PSS purified product (%) | Oil or fat B %) |
| Example 7 | 0.0294 | - | 60 | 40 |
| Example 8 | - | 0.00093 | 60 | 40 |

SFC at 40°C of the oil or fat composition is shown in Table 5B. The PTS ratio of the composition was determined by applying SFC to the calibration curve. Furthermore, the PTS ratio of the composition is divided by the proportion of the crystallization accelerator to determine each ratio of an increase in activity (PTS ratio) of the chloroform-extractable part and the polymer compound. The results are shown in Table 5B.

[Table 5B]

| | SFC at 40°C for 20 minutes (%) | PTS ratio X of composition (%) | Proportion Y of crystallization accelerator (%) | Ratio of increase in activity1) (times, PTS ratio) |
|---|---|---|---|---|
| Example 7 | 33.9 | 6.92 | 0.0294 | 235 |
| Example 8 | 10.4 | 1.91 | 0.00093 | 2,050 |
| 1)Z=X/Y | | | | |

A ratio of an increase in activity of each fraction of Example 2 (PSS ratio and PTS ratio) and the concentration of the polymer compound calculated from the increase ratio are collectively shown in Table 6.

[Table 6]

| Operation | Name | Weight (g) | Ratio of increase in activity (times) | | Polymer compound (g) | Concentration of polymer compound (% by weight) |
|---|---|---|---|---|---|---|
| | | | PSS ratio | PTS ratio | | |
| Raw material | PSS | 2432* | 1 | 0.053 | 0.0631 | 0.00260 |
| Dry fractionation | PTS | 100 | 18.8 | 1 | 0.0488 | 0.0488 |
| | PSS-OL | 2332 | 0.24 | 0.013 | 0.0143 | 0.00061 |

(continued)

| Operation | Name | Weight (g) | Ratio of increase in activity (times) | | Polymer compound (g) | Concentration of polymer compound (% by weight) |
|---|---|---|---|---|---|---|
| | | | PSS ratio | PTS ratio | | |
| Chloroform washing at 20°C | Chloroform-insoluble part | 10.25 | 134 | 7.12 | 0.0356 | 0.347 |
| | Chloroform-soluble part | 89.75 | 5.7 | 0.30 | 0.0132 | 0.0147 |
| Hexane washing at 60°C | Hexane-insoluble part | 1.82 | 658 | 35.0 | 0.0311 | 1.71 |
| | Hexane-soluble part | 8.42 | 20.6 | 1.10 | 0.00451 | 0.0535 |
| Chloroform extraction at 60 °C | Chloroform-extractable part | 0.0561 | 3928 | 209 | 0.00572 | 10.2 |
| | Chloroform-insoluble part | 1.77 | 553 | 29.4 | 0.0254 | 1.43 |
| GPC fractionation | Polymer compound (Example 8) | 0.00572 | 38507 | 2050 | 0.00572 | 100 |
| *Weight of PSS is the value expressed in terms of 100 g of PTS | | | | | | |

[Example 9] (Measurement of Molecular Weight of Polymer Compound)

The chloroform-extractable part obtained in the same manner as in Example 2 was dissolved in chloroform, followed by GPC analysis. The measuring conditions are the same as in Example 2, except that TSKgel G4000$H_{XL}$, 7.8 mm I.D. x 30cm, particle diameter of 5 μm (manufactured by TOSOH CORPORATION) was used as the GPC column. A GPC chart is shown in Fig. 4.

Fractions corresponding to Nos. 1 to 5 of the GPC chart in Fig. 4 were separately recovered. The polystyrene-equivalent molecular weight in the table is determined by GPC analysis of Shodex STANDARD SM-105 (manufactured by Showa Denko K.K.) which is a standard product of polystyrene (molecular weight of a standard product is a weight average molecular weight measured by a light scattering method) and calculating from the obtained retention time. A ratio of an increase in activity (PTS ratio) of each fraction was determined by the same procedure as in Example 7. The results are shown in Table 7.

[Table 7]

| Fraction No. | Polystyrene-equivalent molecular weight | Recovered weight (mg) | Ratio of increase in activity (times, PTS ratio) |
|---|---|---|---|
| 1 | 50,000 to 100,000 | 0.1 | 317 |
| 2 | 17,500 to 50,000 | 0.7 | 1,626 |
| 3 | 5,000 to 17,500 | 1.0 | 3,317 |
| 4 | 3,000 to 5,000 | 1.0 | 63 |
| 5 | 1,000 to 3,000 | 24.7 | 1 to 10 |

As is apparent from Table 7, the molecular weight of the polymer compound is within a range of 3,000 to 100,000, preferably 5,000 to 100,000, and still more preferably 5,000 to 50,000.

The above fractions 2 to 4 were dissolved in deuterated chloroform, followed by the measurement of $^1$H NMR (600 MHz). $^1$H NMR chart of the fraction 2 is shown in Fig. 5. In $^1$H NMR of these fractions, a peak assigned to methylene protons (2H) adjacent to a hydroxyl group of hydroxy fatty acid is observed in chemical shifts within a range of 4.0 ppm

to 4.1 ppm, and a peak assigned to methylene protons (4H) of glycerol is observed in chemical shifts within a range of 4.1 ppm to 4.4 ppm.

A molar ratio of hydroxy fatty acid to glycerol in the chemical structure of the polymer compound was determined from the above proton ratio. As a result, hydroxy fatty acid:glycerol were respectively 1.8:1 (fraction 2), 4.7:1 (fraction 3), and 4.9:1 (fraction 4) in fractions 2 to 4 in Table 7. These results reveal that a molar ratio of hydroxy fatty acid to glycerol in the chemical structure of the polymer compound of the present invention is preferably within a range of hydroxy fatty acid:glycerol = 10:1 to 1:1. Still more preferably, a molar ratio is within a range of hydroxy fatty acid:glycerol = 7:1 to 1:1.

A weight ratio of fatty acid (including diacid) to hydroxy fatty acid was calculated from the results of NMR, a molar ratio of fatty acid (including diacid):hydroxy fatty acid of fractions 2, 3, and 4 were respectively 68:32, 30:70, and 31:69.

NMR analysis of the polymer compound of Example 2 was performed in the same manner. As a result, a molar ratio of fatty acid (including diacid):hydroxy fatty acid was 15:85 (molar ratio).

[Example 10] (Analysis I of Constituent Component of Polymer Compound in Crystallization Accelerator)

MALDI/TOF/MS analysis of the polymer compound obtained in Example 2 was performed under the following conditions.

Equipment: AXIMA-TOF2 (Shimadzu Corporation)
Laser: Nitrogen laser (wavelength: 337 nm)
Matrix: Dithranol
Cationization agent: Sodium trifluoroacetate

The polymer compound was subjected to methanolysis by reacting with a 14% boron trifluoride methanol solution at 80°C for 8 hours. The sample subjected to methanolysis was reacted with a trimethylsilylating agent (TMSI-H, manufactured by GL Sciences Inc.) at 60°C for 1 hour. The thus obtained decomposition product was dissolved in methanol/acetone (= 1/1) and then constituent components were identified by GC/MS. The measuring conditions of GC/MS are as follows.

Equipment: JMS-700V mass spectrometer (manufactured by JEOL, Ltd.) 6890 series GC System (manufactured by Agilent Technologies Inc.)
Column: CP-TAP CB for Triglycerides, 0.25 mm I.D. x 25 m,
Film thickness of 0.1 μm (manufactured by Varian, Inc.)
Carrier gas: helium gas 1.7 ml/minute
Column temperature: 200°C (1 minute)-5°C/minute-355°C (10 minute)
Injection port temperature: 350°C
Interface temperature: 350°C
Injection amount of sample solution: 1 μl
Split ratio: 1:10
Ionization method: EI
Measuring ion: Cation
Ionizing current: 300 μA
Electron acceleration voltage: 70 eV
Ion source temperature: 340°C
Ion acceleration voltage: 10 kV
Scanning field: m/z 35 to 800

MALDI/TOF/MS chart is shown in Fig. 6. A polymer compound including repeating unit of 380 Da was mainly detected from Fig. 6. Mass spectrometry data of a trimethylsilylated saturated hydroxy fatty acid methyl having 22 carbon atoms identified by GC/MS of the decomposition product is shown in Fig. 7. Hydroxy fatty acids having 18, 22, 24, and 28 carbon chains were also identified by GC/MS in the same manner.

It has been found that the repeating unit of 380 Da has a structural formula represented by the following formula:

[Chemical 2]

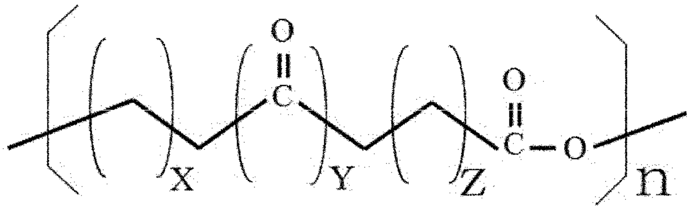

wherein x is an integer of 0 to 21, y is 1, and z is an integer of 0 to 21, provided that the total of x, y, and z is 21. The results of GC/MS of the decomposition product revealed that the repeating unit of 380 Da of Fig. 6 is derived from oxo C24:0 hydroxy fatty acid.

[Example 11 (Analysis II of Constituent Component in Crystallization Accelerator)

Methanolysis and trimethylsilylation of the polymer compound (lot 2) obtained in the same manner as in Example 2 using PSS whose lot is different from that of Example 2 (lot 1) were performed. The quantity of a hydroxy fatty acid derivative identified by GC/MS, and a methyl esterified constituent fatty acid were determined by GC/FID. The conditions of GC/FID are shown below.

Equipment: 6890 series GC System (manufactured by Agilent Technologies Inc.)
Column: CP-TAP CB for Triglycerides, 0.25 mm I.D. x 25m,
Film thickness of 0.1 μm (manufactured by Varian, Inc.)
Carrier gas: Helium gas, 1.7 ml/minute
Column temperature: 200°C (1 minute)-5°C/minute-355°C (10 minute)
Injection port temperature: 350°C
Detector temperature: 365°C
Injection amount of sample solution: 1 μl
Split ratio: 1:50

The results analyzed by GC/FID are shown in Table 8.

[Table 8]

| | | Example 2 | Example 11 |
|---|---|---|---|
| | | Lot 1 | Lot 2 |
| Fatty acid (FA) | C16:0 | 12.4% | 7.8% |
| | C18:0 | 9.8% | 3.7% |
| | C18:1 | 10.9% | 3.0% |
| | C22:0 | 10.1% | 6.7% |
| | C24:0 | 3.4% | 4.8% |
| | Oxo C24:0 | 7.8% | 8.1% |
| | C26:0 | 2.4% | 3.4% |
| | C28:0 | 11.5% | 17.8% |
| | Whole FA | 68.2% | 55.4% |
| Hydroxy fatty acid (FA-OH) | C18:0-OH | 6.4% | 6.3% |
| | C22:0-OH | 5.4% | 9.3% |
| | C24:0-OH | 2.5% | 4.3% |
| | Oxo C24:0-OH | 8.4% | 14.3% |
| | C28:0-OH | 2.9% | 6.6% |
| | Whole FA-OH | 25.7% | 40.8% |
| Diacid (C18:0) | | 6.1% | 3.8% |

As a result of GC/MS of the decomposition product of the polymer compound in Example 10, a component derived from C18:0 diacid was detected. As shown in Table 8, a weight ratio of diacid (C18:0) to hydroxy fatty acid (diacid (C18:0):hydroxy fatty acid) was 1:4 to 1:11.

The composition of the hydroxy fatty acid derivative analyzed by GC/FID is shown in Table 9.

[Table 9]

| Hydroxy fatty acid | Example 2 | Example 11 |
|---|---|---|
| | Lot 1 | Lot 2 |
| C18:0 | 25.0% | 15.3% |
| C22:0 | 21.2% | 22.9% |
| C24:0 and Oxo C24:0 | 42.4% | 45.6% |
| C28:0 | 11.4% | 16.2% |
| Total | 100% | 100% |

A weight ratio of C18:C22:C24:C28 of hydroxy fatty acid having 18 to 28 carbon atoms in the polymer compound is 5 to 45:10 to 40:20 to 65:5 to 30.

A ratio of the hydroxy fatty acid derivative to the oxohydroxy fatty acid derivative of the above product is shown in Table 10.

[Table 10]

| | Example 2 | Example 11 |
|---|---|---|
| | Lot 1 | Lot 2 |
| Hydroxy fatty acid | 67.2% | 64.9% |
| Oxohydroxy fatty acid | 32.8% | 35.1% |
| Total | 100% | 100% |

[Example 12] (Preparation of Crystallization Accelerating Oil or Fat Composition I)

PTS was prepared by the same procedure as in Example 2, except that PSS of IV 12 whose lot is different from that of Example 2 (manufactured by MEWAHOLEO INDUSTRIES SDN.BHD.) was used. When slurry SFC reaches 0.7% during crystallization, pressure filtration was performed. The yield of a hard part was 2.5% by weight. Fractionation efficiency was 3.5. The concentration of the polymer compound in PTS was 0.07% by weight as a result of calculation.

In order to measure the activity of the crystallization accelerator composed of PTS, oil or fat compositions shown in Table 11 were prepared. For comparison, wholly hydrogenated rapeseed oil (manufactured by Yokozeki Oil & Fat Industries Co.) or tripalmitin (manufactured by Wako Pure Chemical Industries, Ltd.) was added to a base oil to prepare an oil or fat composition.

SFC at 25°C for 4 to 20 minutes of each oil or fat composition was measured. After completely melting at 80°C, 2 ml of an oil or fat composition was charged in a glass container. After completely melting at 100°C, the an oil or fat composition was maintained in a constant temperature water bath at 60°C for 60 minutes. Furthermore, after being left to stand in a constant temperature water bath at 25°C for 4 to 20 minutes, the amount of the precipitated crystal was measured by an NMR analyzer. The results are shown in Table 11 and Fig. 8.

[Table 11]

| | Oil or fat composition | | | | SFC at 25°C (%) | | | | |
|---|---|---|---|---|---|---|---|---|---|
| | Crystallization accelerator | Proportion (%) | Base oil | Proportion (%) | 4 minutes | 8 minutes | 12 minutes | 16 minutes | 20 minutes |
| Example 12 | PTS | 1 | Oil or fat A | 99 | 0 | 1.1 | 3.1 | 6.0 | 9.9 |
| Comparative Example 2 | - | - | Oil or fat A | 100 | 0.3 | 0.2 | 0.2 | 0.4 | 0.7 |
| Comparative Example 3 | Wholly hydrogenated rapeseed oil | 1 | Oil or fat A | 99 | 0 | 0.8 | 2.1 | 3.2 | 3.9 |
| Comparative Example 4 | Tripalmitin | 1 | Oil or fat A | 99 | 0.4 | 0.3 | 0.4 | 1.5 | 1.6 |

As is apparent from Table 11 and Fig. 8, regarding the crystallization accelerating oil or fat composition containing the crystallization accelerator of the present invention added therein, SFC is the same as those of Comparative Examples 2 to 3 until standing at 25°C for 0 to 4 minutes, but SFC rapidly increases after subsequent standing as compared with other examples. This property enables significant improvement in workability in that crystallization occurs at an early stage while ensuring working time at an initial stage of the production.

[Example 13] (Preparation of Crystallization Accelerating Oil or Fat Composition II)

A crystallization accelerator composed of a polymer compound was mixed in a base oil A to prepare a crystallization accelerating oil or fat composition. The polymer compound was prepared by the same procedure as in Example 2. For comparison, an oil or fat composition using a conventional emulsifier shown in Table 12 in place of the polymer compound was also prepared. SFC at 25°C for 20 minutes of these oil or fat compositions was measured. The results are shown in Table 12.

[Table 12]

| | Oil or fat composition | | | | SFC at 25°C for 20 minutes (%) |
|---|---|---|---|---|---|
| | Crystallization accelerator | Proportion (%) | Base oil | Proportion (%) | |
| Example 13 | Polymer compound | 0.0005 | Oil or fat A | 99.9995 | 9.8 |
| Comparative Example 5 | Emulsifier Poem J-46B 1) | 0.01 | Oil or fat A | 99.99 | 0.6 |
| Comparative Example 6 | Emulsifier Sunfat PS-68 2) | 0.01 | Oil or fat A | 99.99 | 0.7 |

1) Poem J-46B: Tetraglycerol hexabehenate (manufactured by RIKEN VITAMIN CO., LTD.)
2) Sunfat PS-68: Hexaglycerol octastearate (manufactured by Taiyo Kagaku Co., Ltd.)

As is apparent from Table 12, a crystallization accelerator composed of a polymer compound is noticeably excellent in activity.

[Examples 14 to 15] (Production of Doughnut Frying Oil)

An influence of the activity was examined when an oil or fat composition of the present invention is heated. Specifically, PTS of Example 12 was added in the proportion shown in Table 13, to a base oil containing palm oil (IV 52) and palm olein (IV 56) mixed therein in a weight ratio of 70:30 (hereinafter referred to as oil or fat C) and a base oil containing palm stearin (IV 32), palm oil (IV 52), and rapeseed oil mixed therein in a ratio of 20:40:40 (hereinafter referred to as oil or fat D). The thus obtained oil or fat composition (250 g) was heated to 190°C in a porcelain dish.

Before heating, 24 hours after heating, and 48 hours after heating, the oil or fat composition was sampled and then SFC was measured after being left to stand at 25°C for 20 minute. The results are shown in Table 13. For comparison, an oil or fat composition in which two types of emulsifiers shown in Table 13 are mixed in an oil or fat C was tested in the same manner as above, in place of the oil or fat composition of the present invention. The results are shown in Table 13.

[Table 13]

| | Composition of oil or fat composition | | | | SFC of oil or fat composition[3)] | | | Ratio of reduction in SFC (%)[4)] |
|---|---|---|---|---|---|---|---|---|
| | Base oil | Proportion (%) | Crystallization accelerator | Proportion (%) | Before heating | 24 hours after heating | 48 hours after heating | |
| Example 14 | Oil or fat C[1)] | 99.0 | PTS of Example 12 | 1.0 | 8.4 | 8.8 | 8.0 | 4.8 |
| Example 15 | Oil or fat D[2)] | 99.0 | PTS of Example 12 | 1.0 | 12.9 | 13.1 | 12.1 | 6.2 |
| Comparative Example 7 | Oil or fat C | 99.0 | Poem J-46B | 1.0 | 8.3 | 6.1 | 1.3 | 84.3 |
| Comparative Example 8 | Oil or fat C | 99.0 | Sunfat PS-68 | 1.0 | 4.2 | 1.8 | 1.6 | 61.9 |
| Comparative Example 9 | Oil or fat D | 100 | - | - | 8.8 | 6.4 | 4.9 | 44.3 |

1) Oil or fat C: Compounded oil of palm oil (IV52):palm olein (IV56) (= 70:30)
2) Oil or fat D: Compounded oil of palm stearin (IV32):palm oil (IV52):rapeseed oil (= 20:40:40)
3) SFC: solid content after being left to stand at 25°C for 20 minutes
4) Ratio of reduction in SFC = (SFC before heating - SFC 48 hours after heating)/SFC before heating x 100

While an emulsifier having known crystallization accelerating effect causes significant reduction due to heating, the oil or fat composition of the present invention is excellent in that reduction in crystallization accelerating function is not recognized even when heated under approximate frying conditions.

[Example 16] (Production of Shortening)

An oil or fat composition for shortening, containing the crystallization accelerator composed of PTS of Example 12 mixed therein was produced. Specifically, palm oil and palm kernel oil (weight ratio of 3:7) were transesterified and then PTS of Example 12 was added in the proportion shown in Table 14, to a base oil composed of hydrogenated oil or fat:palm olein (IV56):soybean oil (= 20:60:20) (hereinafter referred to as oil or fat E). Physical properties of the thus obtained shortening were evaluated. First, SFC after being left to stand at 25°C for 20 minutes of the shortening was evaluated. The results are shown in Table 14.

The filling state of the shortening was evaluated by the following criteria.

A: Good
B: Slightly soft or hard
C: Soft or hard

The results are shown in Table 14.

Hardness of the shortening was mesaured by a rheometer (product name: FUDOH rheometer, manufactured by RHEOTECH). The hardness is represented as a stress value when a cylindrical probe having a diameter of 15 mm is forced by 10 mm at a rate of 60 mm/min. For comparison, an oil or fat composition containing the emulsifier shown in Table 14 added therein in place of PTS was tested in the same manner as above. The results are shown in Table 14.

[Table 14]

| | Composition of oil or fat composition | | | | Physical properties of oil or fat composition | | |
|---|---|---|---|---|---|---|---|
| | Base oil | Proportion (%) | Crystallization accelerator | Proportion (%) | SFC 2) | Hardness 3) (g) | Filling state |
| Example 16 | Oil or fat E 1) | 99.0 | PTS of Example 12 | 1.0 | 17.6 | 23.6 | A |
| Comparative Example 10 | Oil or fat E | 100 | - | - | 14.5 | 10.7 | C |
| Comparative Example 11 | Oil or fat E | 99.0 | Poem J-46B | 1.0 | 14.9 | 15.0 | B |
| Comparative Example 12 | Oil or fat E | 99.0 | Extremely hardened palm oil | 1.0 | 14.3 | 59.9 | B |

1) Oil or fat E: Compounded oil of an oil or fat, which is obtained by hydrogenating palm oil and palm kernel oil (3:7), followed by transesterification:palm olein (IV 56):soybean oil (= 20:60:20)
2) SFC: Solid content after being left to stand at 25°C for 20 minutes
3) Hardness: Stress value when a cylindrical probe having a diameter of 15 mm is forced by 10 mm at a rate of 60 mm/min, measured using FUDOH rheometer

As shown in Table 14, regarding the shortening produced by using the crystallization accelerator of the present invention, the filling state was improved by acceleration of crystallization.

[Example 17] (Production of Chocolate A)

Using an oil or fat composition containing the crystallization accelerator of the present invention mixed therein a chocolate was produced. A chocolate base dough with the composition shown in Table 15 was produced by the following procedure. Using a heating type mixer, whole amount of cocoa powder, sugar and lactose, 23% of an oil or fat F, and 0.125% of lecithin were stirred at 45 to 55°C for about 20 minutes until the mixture becomes pasty. The thus obtained dough was refined by a three roll mill, and then 5% of an oil or fat F and 0.125% of lecithin were mixed, followed by conching while stirring at 45 to 55°C for about 3 hours. Furthermore, 7% of the remaining oil or fat and 0.25% of

lecithin was mixed, followed by stirring at 45 to 55°C for 30 minutes to obtain a chocolate base dough A.

[Table 15]

| Composition of raw material | Proportion |
|---|---|
| Oil or fat F[1)] | 35.00% |
| Cocoa powder | 17.50% |
| Sugar | 33.00% |
| Lactose | 8.95% |
| Lecithin | 0.50% |
| Lignin vanillin | 0.05% |
| Total | 95.00% |
| 1) Oil or fat F: Compounded oil of extremely hardened palm kernel oil:palm kernel olein (= 70:30) | |

An oil or fat F (4%) and 1% of a crystallization accelerating oil or fat PTS obtained in Example 12 were mixed, and 95% of a chocolate base dough A obtained above was added, followed by heating at 80°C and further well stirring. The chocolate A (2 g) in a molten state was added dropwise in a stainless steel vat. After maintaining at 40°C for 10 minutes, the stainless steel vat was allowed to stand at room temperature of 20°C. Then, the sagging state and the drying state of the chocolate were observed. The sagging state of the chocolate (sagging length), and the time required until the chocolates does not adhere to the hand when touching the chocolate in the drying state is shown in Table 16.

Based on these results, overall evaluation was performed by the following criteria.

A: Initial viscosity is low (sagging length is sufficiently long), and drying rate becomes higher than that in the case of no addition.
B: Initial viscosity is not high (sagging length is long), and drying rate becomes slightly higher than that in the case of no addition.
C: Initial viscosity is high (sagging length is short) or initial viscosity is not high (sagging length is long), and drying rate becomes identical to or lower than that in the case of no addition.

For comparison, using the emulsifier shown in Table 16 in place of the crystallization accelerator of the present invention, a test was performed in the same manner as above. The results are shown in Table 16.

[Table 16]

| | Composition of chocolate A | | | | | | Evaluation | | |
|---|---|---|---|---|---|---|---|---|---|
| | Base dough | Proportion (%) | Base oil | Proportion (%) | Crystallization accelerator | Proportion (%) | Drying time | Sagging length (cm) | Overall evaluation |
| Example 17 | Chocolate base dough A | 95 | Oil or fat F[1)] | 4 | PTS of Example 12 | 1 | 4 minutes 40 seconds | 20 | A |
| Comparative Example 13 | | | | 4 | Poem J-46B | 1 | 5 minutes 00 seconds | 15 | C |
| Comparative Example 14 | | | | 4 | Poem S-65V[2)] | 1 | 6 minutes 00 seconds | 23 | C |
| Comparative Example 15 | | | | 4 | Extremely hardened palm oil | 1 | 5 minutes 15 seconds | 23 | B |
| Comparative Example 16 | | | | 5 | - | - | 5 minutes 50 seconds | 22 | C |

1) Oil or fat F: Compounded oil of extremely hardened palm kernel oil:palm kernel olein (= 70:30)
2) Poem S-65V: Sorbitan fatty acid tristearate (manufactured by RIKEN VITAMIN CO., LTD.)

The chocolate A obtained using the oil or fat composition of the present invention caused a reduction in drying time while appropriately ensuring the sagging length (without a rapid increase in initial viscosity), and exhibited highest overall evaluation.

[Examples 18 to 19] (Production of Chocolate B)

n-hexane (6 parts) was mixed in 1 part of PSS of IV 11 (manufactured by FELDA IFFCO OIL PRODUCTS SDN.BHD.) and solvent fractionation was performed by complete melting at 45°C and cooling to 28°C. SFC of the slurry was 3.2% by weight. The slurry was filtered to separate, followed by removing the solvent to obtain hard part (PTS) in the yield of 4.5% by weight (Example 18). Fractionation efficiency was 1.4. The concentration of the polymer compound of the present invention was 0.06% by weight as a result of calculation.

Using a heating type mixer, raw materials shown in Table 17 were stirred at the temperature of 45 to 55°C for about 20 minutes until the mixture becomes pasty. The thus obtained dough was refined by a three roll mill, followed by conching while stirring at the temperature of 45 to 55°C for about 3 hours to obtain a chocolate base dough B.

[Table 17]

| Composition of raw material | Proportion |
|---|---|
| Oil or fat G[1)] | 17.00% |
| Cocoa mass | 12.00% |
| Whole milk powder | 17.00% |
| Skim milk powder | 14.00% |
| Sugar | 29.45% |
| Lecithin | 0.50% |
| Lignin vanillin | 0.05% |
| Total | 90.00% |
| 1) Oil or fat G: Hard PMF (manufactured by J-Oil Mills Inc.) | |

The oil or fat G was mixed with the above crystallization accelerator in the proportion shown in Table 18, followed by melting. The chocolate base dough B was added in the proportion shown in Table 18, followed by uniform mixing at the temperature of about 45°C. After lowering the temperature of the thus obtained melting dough to 30°C, 0.2% by weight of a tempering seed agent (trade name: Quick Temper, manufactured by Nisshin Kako Co., Ltd.) was added to the dough, followed by tempering. The tempered dough was poured into a mold and then deaerated by tapping. The dough was cooled and solidified by being left to stand at the temperature of about 10°C for 15 minutes. Solidified chocolate was removed from the mold and aged in an incubator at 20°C for 10 days, and then melt-in-the-mouth and snap properties were evaluated by the following criteria. The results are shown in Table 18.

(Evaluation of Melt-in-the-Mouth)

A: Excellent
B: Good
C: Ordinary
D: Poor

(Evaluation of Snap Properties)

A: Excellent
B: Good
C: Ordinary
D: None

In Comparative Example 17, the same operation as in Example 19 was performed, except that a melted oil or fat G was mixed with a melted chocolate base dough B in the proportion shown in Table 18. Then, sensory evaluation was carried out in the same manner as in Example 19. The results are shown in Table 18.

[Table 18]

| | Composition of chocolate B | | | | | | Evaluation | |
|---|---|---|---|---|---|---|---|---|
| | Base dough | Proportion (%) | Base oil | Proportion (%) | Crystallization accelerator | Proportion (%) | Snap properties | Melt-in-the-mouth |
| Example 19 | Chocolate base dough B | 90 | Oil or fat G[1)] | 9.6 | PTS of Example 18 | 0.4 | A | A |
| Comparative Example 17 | Chocolate base dough B | 90 | Oil or fat G[1)] | 10 | - | - | C | B |

1) Oil or fat G: Hard PMF (manufactured by J-Oil Mills Inc.)

As shown in Table 18, the chocolate B produced using the oil or fat composition of the present invention was excellent in snap properties and melt-in-the-mouth.

## Claims

1. A crystallization accelerator comprising a polymer compound that includes, as constituent components, a C18-28 saturated hydroxy fatty acid which respectively has a hydroxyl group and a carboxyl group at both terminals and may have one carbonyl group in the chain thereof, a glycerin and optionally a fatty acid, said polymer compound being polymerized by estel linkage with the constituent components to a molecular weight of 3,000 to 100,000.

2. The crystallization accelerator according to claim 1, which is obtained from palm fruit or a palm-based oil or fat.

3. The crystallization accelerator according to claim 1, wherein the content of the polymer compound is at least 0.005% by weight.

4. The crystallization accelerator according to claim 1, which consists of the polymer compound.

5. The crystallization accelerator according to claim 1, wherein the saturated hydroxy fatty acid has a weight ratio in which C18:C22:C24:C28 is 5 to 45:10 to 40:20 to 65:5 to 30.

6. The crystallization accelerator according to claim 1, wherein the proportion of the C18-28 saturated hydroxy fatty acid which has a carbonyl group in the chain is 15 to 70% by weight based on the whole hydroxy fatty acid.

7. The crystallization accelerator according to claim 1, wherein a molar ratio of the saturated hydroxy fatty acid to glycerol is 10:1 to 1:1.

8. The crystallization accelerator according to claim 1, wherein the hydroxy fatty acid accounts for 20 to 90% of the total of the saturated hydroxy fatty acid and the fatty acid.

9. The crystallization accelerator according to claim 1, wherein the proportion of the C24 saturated hydroxy fatty acid which has a carbonyl group in the chain thereof is at least 90% by weight based on the whole hydroxy fatty acid having a carbonyl group in the chain thereof.

10. A method for producing the crystallization accelerator according to claim 1, which comprises the step of recovering a crystallization accelerator by subjecting palm fruit to organic solvent extraction, or oil or fat extraction.

11. The method for producing the crystallization accelerator according to claim 10, wherein the palm fruit is palm kernel.

12. A method for producing the crystallization accelerator according to claim 1, which comprises the step of recovering a hard part obtained by fractionating a palm-based oil or fat.

13. The method for producing the crystallization accelerator according to claim 12, which comprises the step of recovering an organic solvent-insoluble part obtained by further washing the hard part with an organic solvent.

14. The method for producing the crystallization accelerator according to claim 13, which comprises the step of recovering an organic solvent extract obtained by further subjecting the organic solvent-insoluble part to organic solvent extraction.

15. The method for producing the crystallization accelerator according to claim 14, which comprises the step of recovering a fraction having a polystyrene-equivalent molecular weight of 3,000 to 100,000 by subjecting the organic solvent extract to molecular weight fractionation.

16. A crystallization accelerating oil or fat composition comprising:

(I) the crystallization accelerator according to claim 1, and
(II) a base oil composed of an oil or fat having a melting point not lower than 10°C, wherein the content of the component (I) is 0.2 to 15% by weight, and the content of the component (II) is 85 to 99.8% by weight.

**17.** A crystallization accelerating oil or fat composition comprising 0.0005 to 1% by weight of the crystallization accelerator according to claim 4, wherein the composition has an iodine value not less than 40.

**18.** The crystallization accelerating oil or fat composition according to claim 16, for frying oil, shortening, margarine, chocolate, curry roux, or stew roux.

**19.** A food using the crystallization accelerating oil or fat composition according to claim 16.

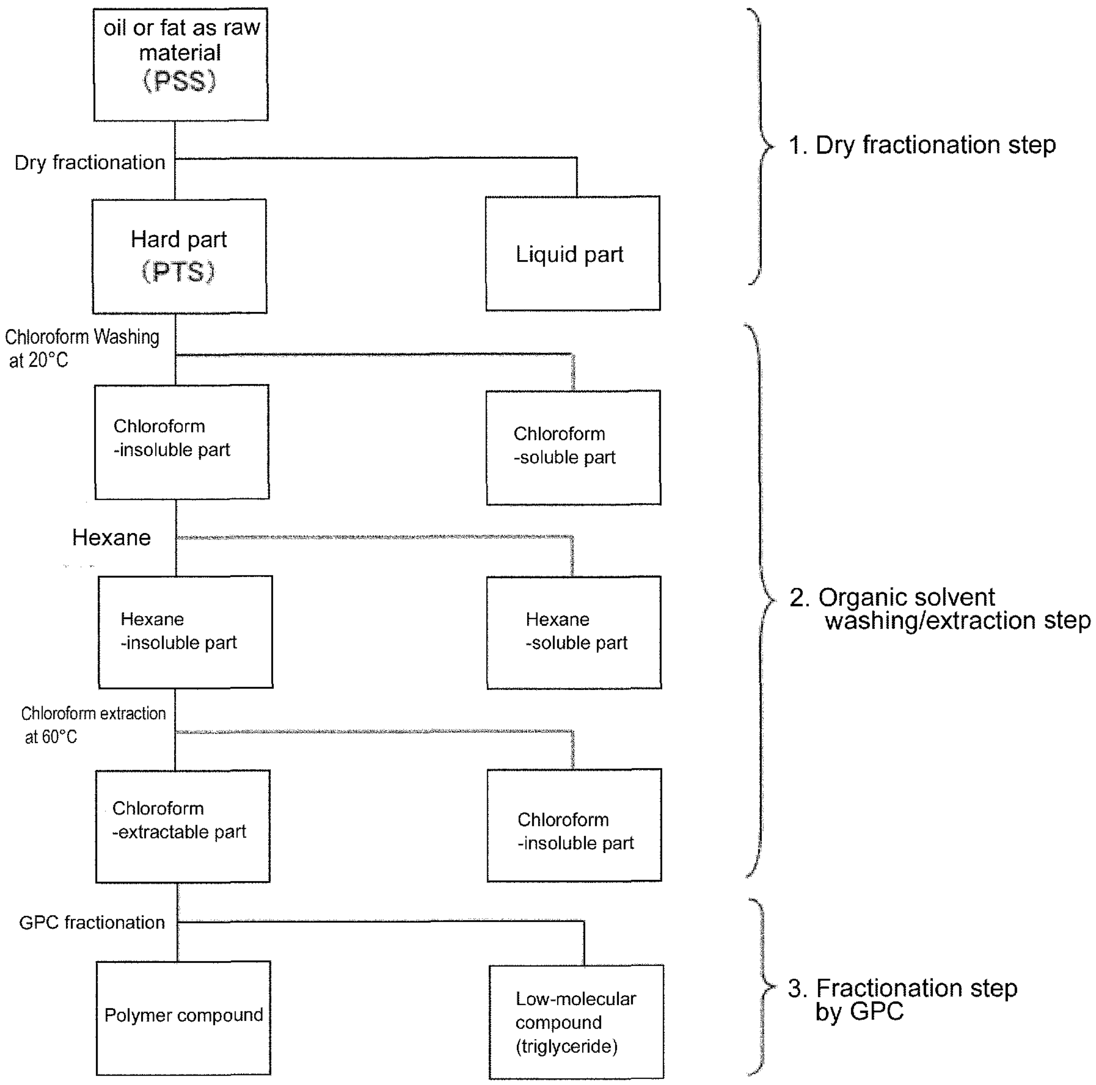
oil or fat as raw material (PSS)
Dry fractionation
Hard part (PTS)
Liquid part
Chloroform Washing at 20°C
Chloroform -insoluble part
Chloroform -soluble part
Hexane
Hexane -insoluble part
Hexane -soluble part
Chloroform extraction at 60°C
Chloroform -extractable part
Chloroform -insoluble part
GPC fractionation
Polymer compound
Low-molecular compound (triglyceride)
1. Dry fractionation step
2. Organic solvent washing/extraction step
3. Fractionation step by GPC

Fig. 1

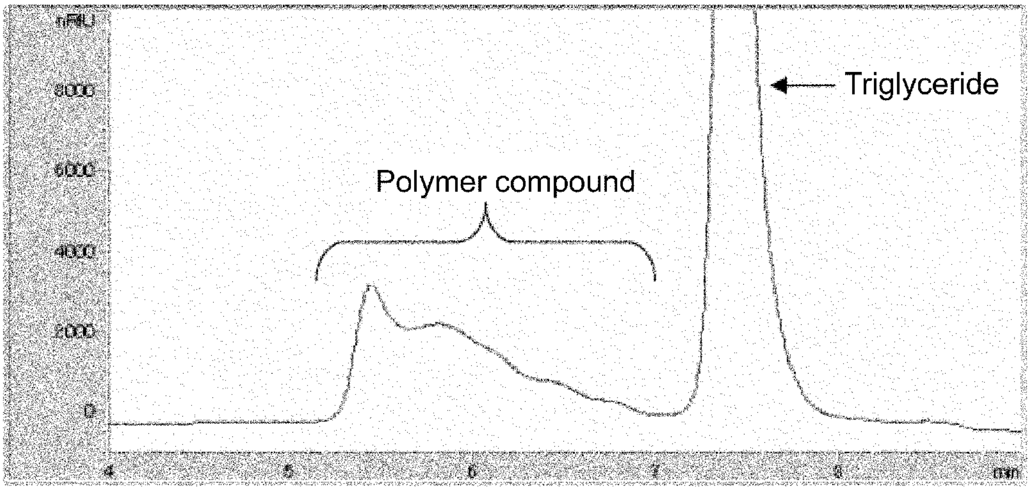
nRIU
8000
6000
4000
2000
0
4
5
6
7
8
min
Triglyceride
Polymer compound

Fig. 2

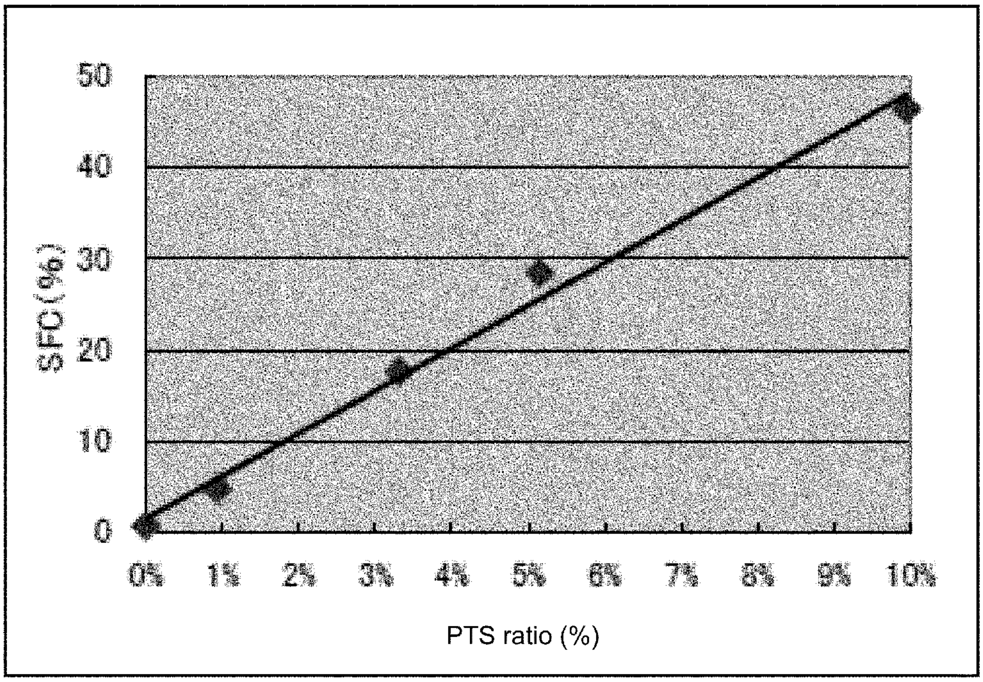
50
40
30
20
10
0
SFC (%)
0%
1%
2%
3%
4%
5%
6%
7%
8%
9%
10%
PTS ratio (%)

Fig. 3

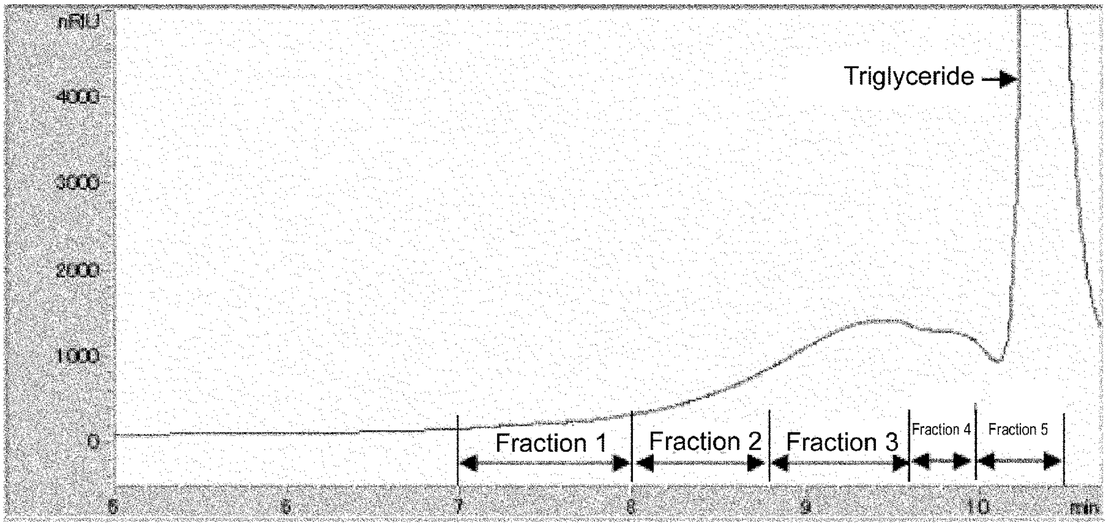
nRIU
4000
3000
2000
1000
0
Triglyceride
Fraction 1
Fraction 2
Fraction 3
Fraction 4
Fraction 5
5
6
7
8
9
10
min

Fig. 4

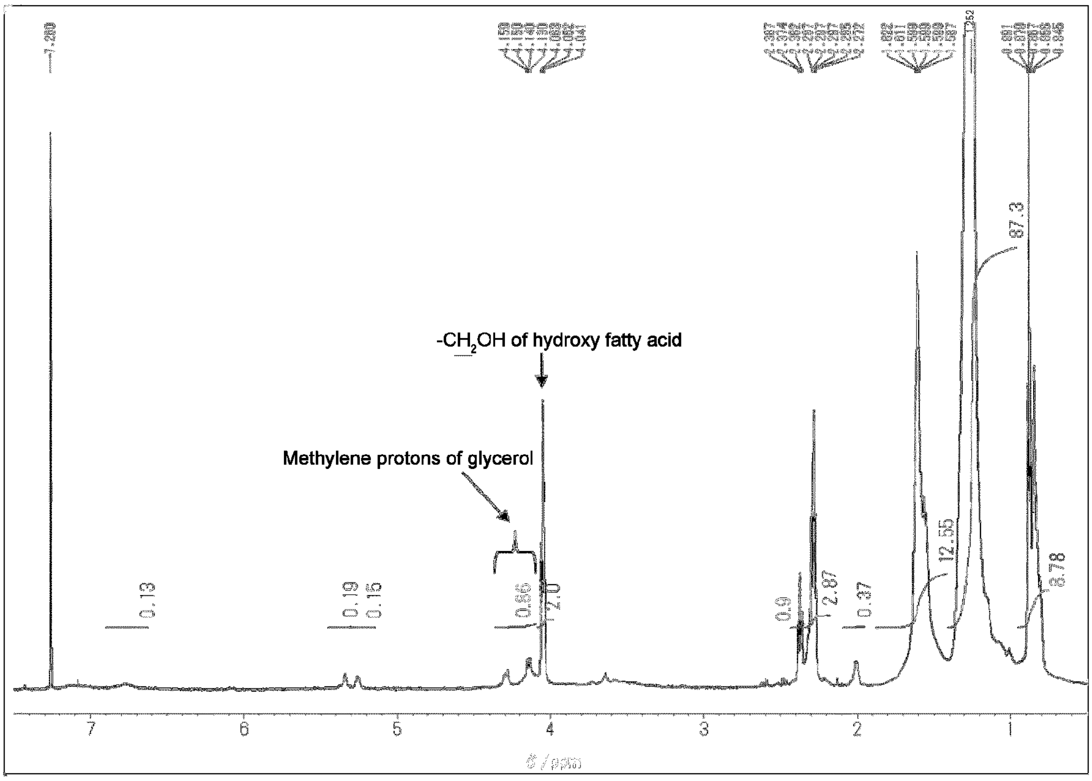
-CH2OH of hydroxy fatty acid
Methylene protons of glycerol
0.13
0.19
0.15
0.66
2.0
0.9
2.87
0.37
12.55
87.3
8.78
7
6
5
4
3
2
1

Fig. 5

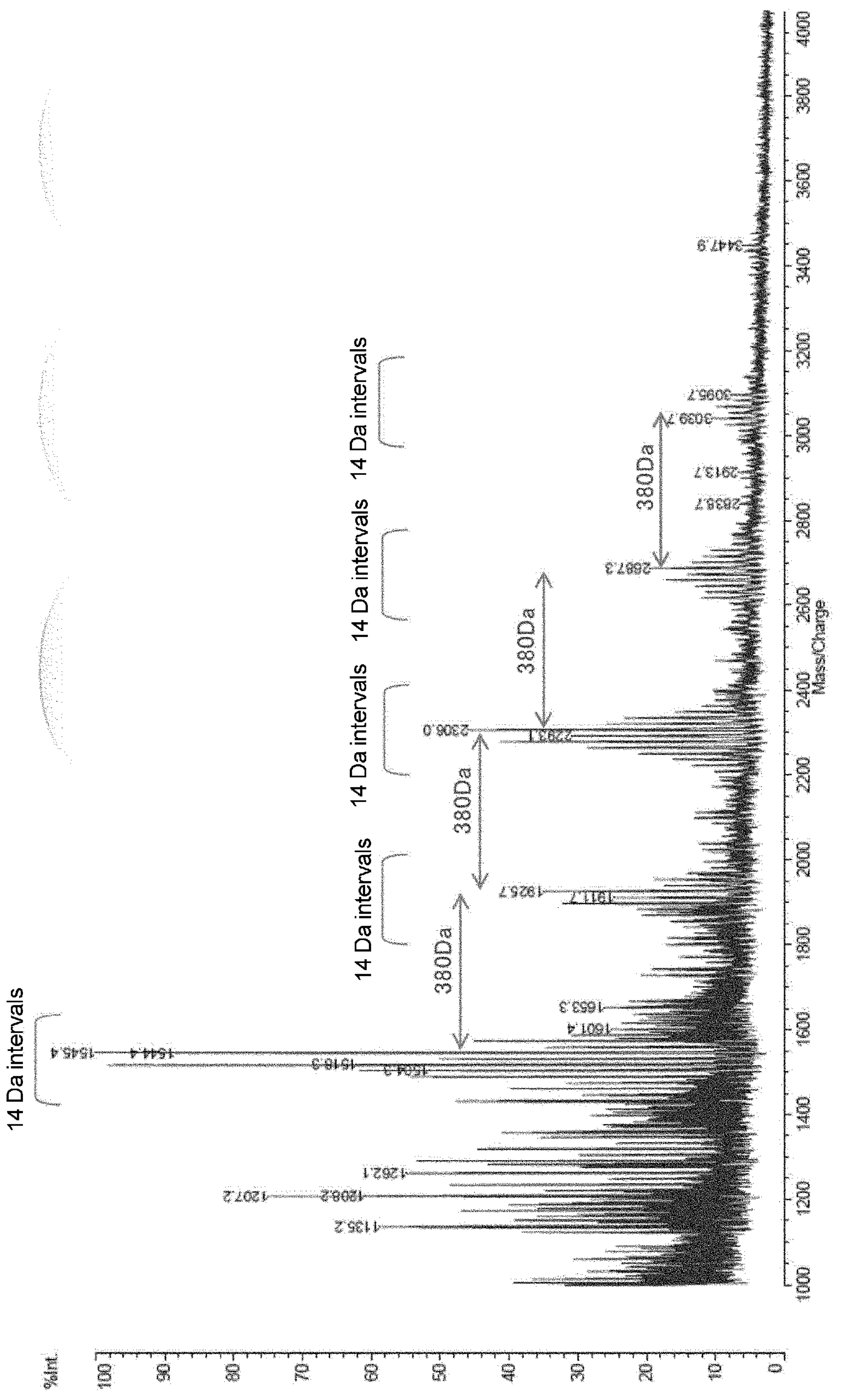
14 Da intervals
14 Da intervals
14 Da intervals
14 Da intervals
14 Da intervals
380Da
380Da
380Da
380Da
%Int.
Mass/Charge
1135.2
1207.2
1208.2
1262.1
1504.3
1518.3
1544.4
1545.4
1601.4
1653.3
1911.7
1925.7
2283.1
2306.0
2687.3
2838.7
2913.7
3039.7
3096.7
3447.9

Fig. 6

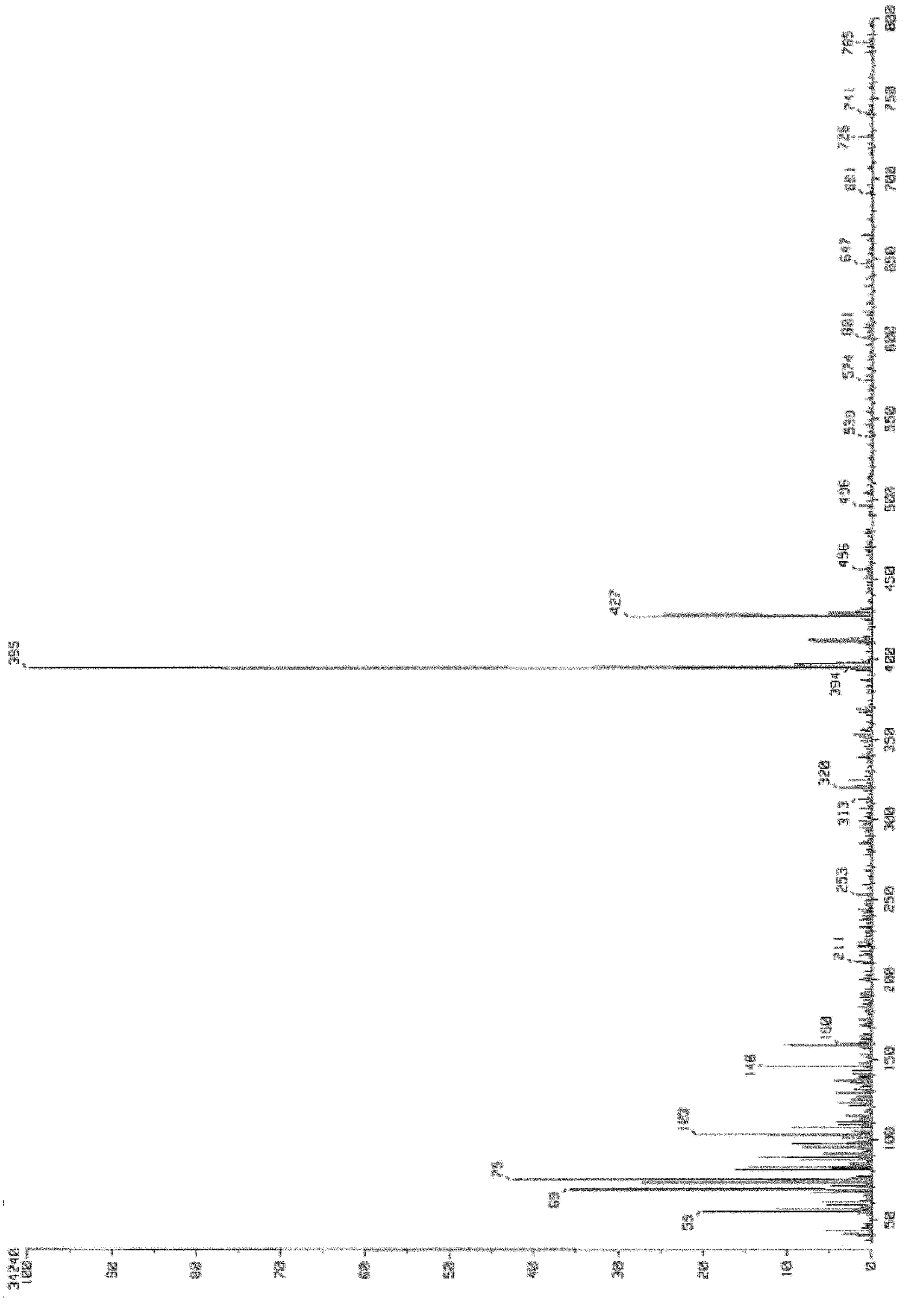
34240
55
69
75
100
140
160
211
253
313
320
394
395
427
456
496
539
574
601
647
681
725
741
765

Fig. 7

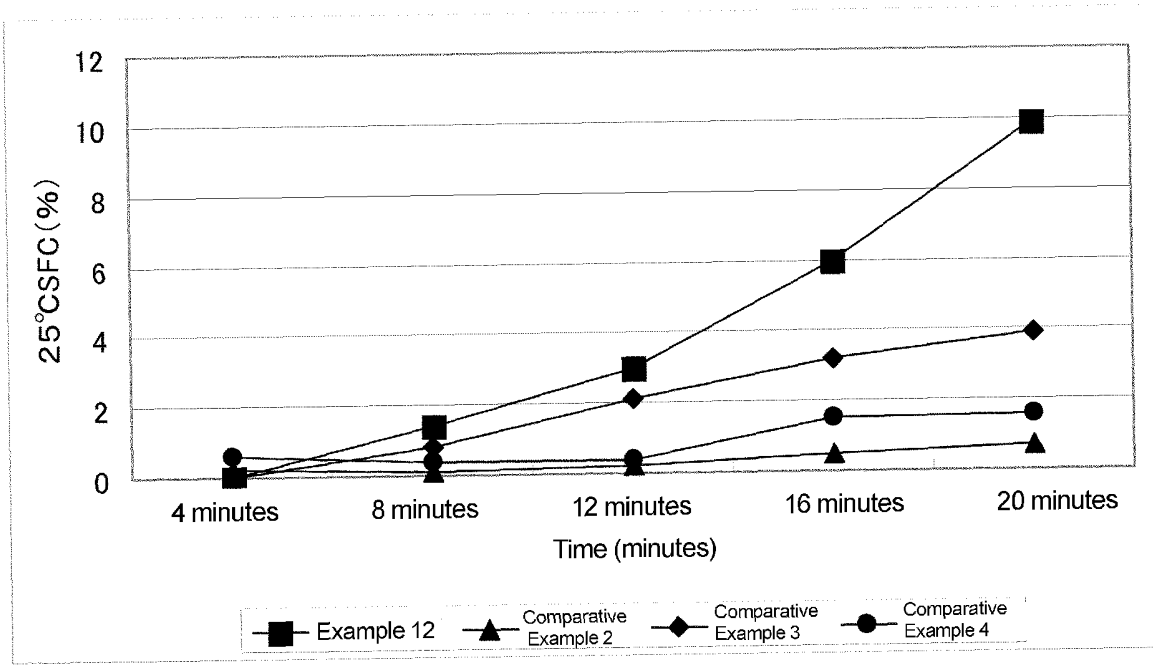
12
10
8
6
4
2
0
25°CSFC(%)
4 minutes
8 minutes
12 minutes
16 minutes
20 minutes
Time (minutes)
Example 12
Comparative Example 2
Comparative Example 3
Comparative Example 4

Fig. 8

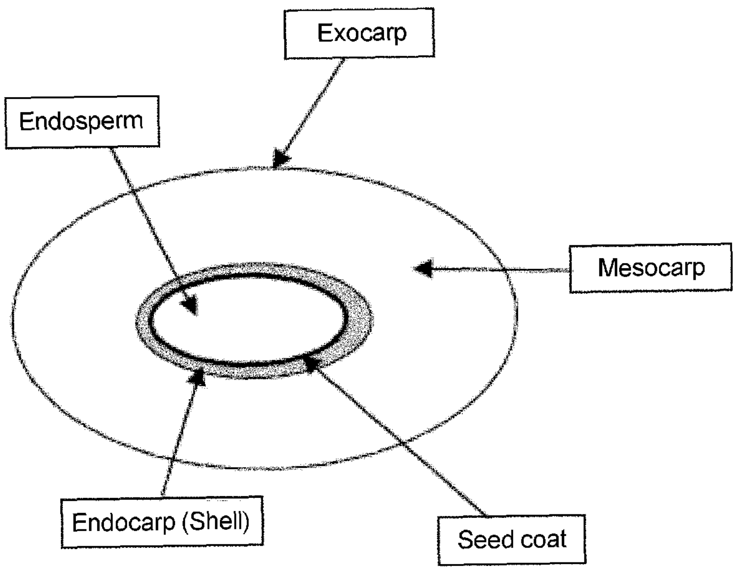
Exocarp
Endosperm
Mesocarp
Endocarp (Shell)
Seed coat

Fig. 9

**INTERNATIONAL SEARCH REPORT**

International application No.
PCT/JP2013/056401

A. CLASSIFICATION OF SUBJECT MATTER
*C11B5/00*(2006.01)i, *A23D7/00*(2006.01)i, *A23D9/00*(2006.01)i, *A23D9/007* (2006.01)i

According to International Patent Classification (IPC) or to both national classification and IPC

B. FIELDS SEARCHED

Minimum documentation searched (classification system followed by classification symbols)
C11B1/00-15/00, C11C1/00-5/02, A23D7/00-9/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CAplus/REGISTRY(STN), JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| A | JP 05-211837 A (Unilever N.V.), 24 August 1993 (24.08.1993), claims & US 5424091 A & GB 9121578 A & EP 536824 A1 | 1-19 |
| A | WO 2010/113969 A1 (Fuji Oil Co., Ltd.), 07 October 2010 (07.10.2010), claims (Family: none) | 1-19 |
| A | WO 2009/060809 A1 (Fuji Oil Co., Ltd.), 14 May 2009 (14.05.2009), claims (Family: none) | 1-19 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 May, 2013 (07.05.13) | 14 May, 2013 (14.05.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/056401

C (Continuation). DOCUMENTS CONSIDERED TO BE RELEVANT

| Category* | Citation of document, with indication, where appropriate, of the relevant passages | Relevant to claim No. |
|---|---|---|
| A | JP 09-285255 A (Fuji Oil Co., Ltd.), 04 November 1997 (04.11.1997), claims & US 5879736 A & EP 803196 A1 | 1-19 |
| A | JP 2000-125764 A (Kaneka Corp.), 09 May 2000 (09.05.2000), claims (Family: none) | 1-19 |
| A | JP 2000-125765 A (Kaneka Corp.), 09 May 2000 (09.05.2000), claims (Family: none) | 1-19 |
| A | JP 07-126604 A (The Nisshin Oil Mills, Ltd.), 16 May 1995 (16.05.1995), claims (Family: none) | 1-19 |
| A | JP 09-013073 A (Kabushiki Kaisha Kankyo Kagaku Center), 14 January 1997 (14.01.1997), claims (Family: none) | 1-19 |
| A | JP 09-157686 A (Nippon Seiro Co., Ltd.), 17 June 1997 (17.06.1997), claims (Family: none) | 1-19 |
| P,A | WO 2012/140937 A1 (J Oil Mills Inc.), 18 October 2012 (18.10.2012), paragraphs [0065] to [0112] & TW 201240604 A | 1-19 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009209350 A